# EUROPEAN PATENT SPECIFICATION

(11) **EP 2 945 328 B1**
(45) Date of publication and mention of the grant of the patent: **08.02.2017**
(21) Application number: 13871132.0
(22) Date of filing: 12.09.2013
(51) Int. Cl.: H04L 12/46, H04L 12/703, H04L 12/24

(54) **METHOD AND APPARATUS FOR KEEPING ALIVE L2TP TUNNEL STATE**
VERFAHREN UND VORRICHTUNG ZUR AUFRECHTERHALTUNG EINES LIVE-L2TP-TUNNELZUSTANDS
PROCÉDÉ ET APPAREIL SERVANT À MAINTENIR L'ACTIVITÉ D'UN TUNNEL L2TP

(30) Priority: 11.01.2013 CN 201310010235
(43) Date of publication of application: 18.11.2015
(73) Proprietor: ZTE Corporation, Shenzhen City Guangdong Province 518057 (CN)
(72) Inventor: LIANG, Qiandeng, Shenzhen Guangdong Province 518057 (CN); FAN, Liang, Shenzhen Guangdong Province 518057 (CN); CHEN, Yong, Shenzhen Guangdong Province 518057 (CN)
(74) Representative: Novagraaf Technologies
(86) International application number: PCT/CN2013/083392
(87) International publication number: WO 2014/107971

(56) References cited:
- CN-A- 101 534 257
- CN-A- 102 710 520
- US-A1- 2006 092 955
- US-A1- 2006 168 241
- US-A1- 2006 182 019
- US-A1- 2010 302 932
- US-B1- 7 808 889
- US-B1- 7 808 889
- US-B1- 8 301 700

## Description

### TECHNICAL FIELD

The embodiments of the present invention relate to the technical communication field, and in particular, to a method and an apparatus for keeping alive an L2TP tunnel state.

### BACKGROUND

The prior art supports backup of a layer two tunnelling protocol (i.e., Layer 2 Tunnelling Proto, L2TP for short) accessing an L2TP concentrator (i.e., L2TP Access Concentrator, LAC for short) or an L2TP network server (LNS for short), and information about an L2TP user and an L2TP tunnel as well as a session is backed up between active and standby LAC devices or active and standby LNS devices, and a backup message is sent via a direct connection link or an up and down layer network link. Since each tunnel serial number continuously changes with interaction of a control message, a tunnel serial number in a backup message and a tunnel control message serial number occurred at the same time cannot realize real-time synchronization. A device A sends a tunnel message serial number X between the device A and a device B to a backup device C thereof through the backup message. When the device B receives the message and identifies and stores a "current" serial number, at an device A side, because a user goes on and off line or an opposite-end Hello message has updated a current practical serial number to X + 1 or X + 2 or even a more larger serial number, and now if a device malfunction occurs and active and standby devices switching is caused to occur, then a serial number of a device B side and a serial number of a device C side do not realize real-time synchronization. Now if the device C sends a tunnel control message to a the device B, the device B will be caused to discard a tunnel control message sent by the device C and at the same time, actively dismantle the L2TP tunnel and cause all users in the tunnel to go off line. In addition, if the device C waits for a control message or hello message of the device B, then a control message of the device C may be caused to be unable to be sent and influence normal on and off line of a user.

Document US2010/302932 A1 provides the following solution: in an LAC device, if switching occurs to an active system of redundant control section, the failover is implemented by learning Ns (sequence number) and Nr (receive acknowledgement response number) included in a control message received from an LNS device after switching, and sending a ZLB-ACK message using this Ns and Nr. However, the above mentioned problem still remains unsolved with this solution.

Document US 7808889 B1 discloses a network device, wherein the network device includes a primary control unit that establishes a network tunnel with another network device. The network device applies a silent failover technique to failover from the primary control unit to a backup control unit while maintaining the network tunnel. However, the above mentioned problem still remains unsolved with this solution.

Document US2006/168241 A1 discloses methods and systems for recovering from an interruption in, or failure of an L2TP tunnel connection, such that reconnection of the tunnel is not required. According to various embodiments, redundant storage of tunnel state information is used to avoid having to reconnect an interrupted or failed tunnel session. According to various other embodiments, extraction of sequence numbers from a peer L2TP endpoint server is achieved by subdividing the set of all available sequence numbers into an appropriate number of divisions, and sending a control message having a sequence number from each of the divisions to the peer endpoint server to elicit a response. However, the above mentioned problem still remains unsolved with this solution.

Document US2006/182019 A1 discloses a method for recovering state information of a first tunnel endpoint of a point to point connection between the first tunnel endpoint and a second tunnel endpoint, the state information comprising a first state variable comprising a sequence number for sent messages and a second state variable comprising a sequence number for received messages. The method comprises detecting a crash of the first tunnel endpoint with a backup tunnel endpoint of the first tunnel endpoint, sending, from the backup tunnel endpoint, at least one request message to the second tunnel endpoint, and recovering the first state variable and the second state variable of the first tunnel endpoint based on the state variables present in at least one response message from the second tunnel endpoint. However, the above mentioned problem still remains unsolved with this solution.

Document US 8301700 B1 discloses a system for event-driven live migration of applications between two or more servers. Primary applications run on primary hosts and one or more replicated instances of each primary application run on one or more backup hosts. Event driven live migration is provided through a combination of process replication, logging, barrio synchronization, reliable messaging and message playback. The event driven live migration is transparent to the application and requires no modification to the application, operating system, networking stack or libraries. However, the above mentioned problem still remains unsolved with this solution.

### SUMMARY

Based on the above-mentioned analysis, the embodiments of the present invention aim to provide a method and an apparatus for keeping alive an L2TP tunnel state so as to solve the problem of working state being chaotic caused by switching of an active device or a standby device.

The object of the embodiments of the present invention is mainly implemented through the following technical solutions:
A method for keeping alive an L2TP tunnel state, wherein the method includes:
   an active device establishes an L2TP tunnel with an opposite-end device, the active device transmits to a standby device an interactive L2TP control message, said interactive L2TP control message comprising an L2TP control message to be sent from the active device to the opposite-end device, or
   an L2TP control message sent from the opposite-end device to the active device; and the active device performs corresponding processing on the L2TP control message only after having received a response sent by the standby device about having stored the L2TP control message;
   and when active-standby switching occurs between the active device and the standby device, the standby device connects to the opposite-end device via the L2TP tunnel, and performs corresponding processing according to the L2TP control message which has already been stored.

Preferably, the step of an active device establishing an L2TP tunnel with an opposite-end device specifically includes:
the active device sends to the standby device a request for establishing the L2TP tunnel with the opposite-end device;
the standby device receives and stores the request sent by the active device, and sends to the active device a response about having stored the request;
and after receiving a response about having stored the request sent by the standby device, the active device sends the request to the opposite-end device, and after receiving information about having successfully established the L2TP tunnel sent by the opposite-end device, sends the information to the standby device for storing.

Preferably, the active device transmits to the standby device an interactive L2TP control message between the active device and the opposite-end device, and the step of the active device performing corresponding processing on the L2TP control message only after having received a response about having already stored the L2TP control message sent by the standby device specifically includes:
the active device sending to the standby device the interactive L2TP control message between the active device and the opposite-end device;
after receiving and storing the L2TP control message sent by the active device, the standby device sending to the active device a response about having stored the L2TP control message;
and the active device then performing corresponding processing on the L2TP control message after receiving the response.

Preferably, the active device is an L2TP access concentrator or an L2TP network server; and the standby device is an L2TP access concentrator or an L2TP network server.

Preferably, each of the L2TP control messages carries a corresponding serial number.

Preferably, the standby device updates states of the L2TP tunnel and a session on the standby device, when the standby device stores the L2TP control message sent by the active device.

The embodiments of the present invention further provide an apparatus for keeping alive an L2TP tunnel state, including:
an active device, configured to establish an L2TP tunnel with an opposite-end device, and transmit to a standby device an interactive L2TP control message, said interactive L2TP control message comprising an L2TP control message to be sent from the active device to the opposite-end device, or an L2TP control message sent from the opposite-end device to the active device; and perform corresponding processing on the L2TP control message only after having received a response sent by the standby device about having already stored the L2TP control message;
and the standby device, configured to the active device a response about having stored the L2TP control message after receiving and store the L2TP control message sent by the active device, and when active-standby switching occurs between the standby device and the active device, connect to the opposite-end device via the L2TP tunnel, and perform corresponding processing according to the L2TP control message which has already been stored.

Preferably, the active device, further configured to send to the standby device a request for establishing the L2TP tunnel with the opposite-end device, and after receiving a response about having stored the request sent by the standby device, sending the request to the opposite-end device, and after receiving information about having successfully established the L2TP tunnel sent by the opposite-end device, send the information to the standby device, and receive a response about the standby device having stored the information;
and the standby device, further configured to send to the active device a response about having stored the request after receiving and storing the request sent by the active device, and sending to the active device a response about having stored the information after receiving and storing information about having successfully established the L2TP tunnel sent by the active device.

Preferably, the active device is an L2TP access concentrator or an L2TP network servers; and the standby device is an L2TP access concentrator or an L2TP network server.

Preferably, the each of the L2TP control messages carries a corresponding serial number.

Preferably, the standby device, further configured to update states of the L2TP tunnel and a session on the standby device, when the standby device stores the L2TP control message sent by the active device.

The embodiments of the present invention have the beneficial effects as follows:
The embodiments of the present invention provide a method and apparatus for keeping alive an L2TP tunnel state, and through the process of an active device establishing an L2TP tunnel with an opposite-end device, and before the active device sends to the opposite-end device an L2TP control message, or before the active device processing the L2TP control message sent by the opposite-end device, the active device will always send to the standby device an L2TP control message with a serial number, and after storing the L2TP control message, the standby device then returns the L2TP control message to an active and standby device, and after receiving the L2TP control message, the active device and the standby device then perform other processing, that is, control messages of an active device and an opposite-end device in the embodiments of the present invention always keep synchronous, ensuring that after switching between the active and standby device, the standby device and the opposite-end device can work normally, which will not cause discarding of the message, and ensuring the normal working state.

Other features and advantages of the embodiments of the present invention will be described in the following description and partly become obvious from the description, or be understood by implementing the present invention. The objects and other advantages of the present invention can be realized and obtained through the structures indicated by the description, claims and drawings.

### BRIEF DESCRIPTION OF THE DRAWINGS

Fig. 1 shows an example flowchart of a method for keeping alive an L2TP tunnel state according to embodiment 1 of the present invention;
Fig. 2 shows an example schematic diagram of a method for establishing an L2TP tunnel D between active and standby LACs and LNSs according to embodiment 1 of the present invention;
Fig. 3 shows an example schematic diagram of a method for keeping alive an L2TP tunnel state established by an active and standby device and an opposite-end device according to embodiment 1 of the present invention;
Fig. 4 shows an example schematic diagram of establishing a method for keeping alive an L2TP tunnel state between LAC and active and standby LNSs according to embodiment 1 of the present invention.

### DESCRIPTION OF EMBODIMENTS

Preferred embodiments of the present invention will be described below in detail in conjunction with the drawings, wherein drawings form a part of the application and are used to explain the principles of the present invention together with embodiments of the present invention.

### Embodiment 1

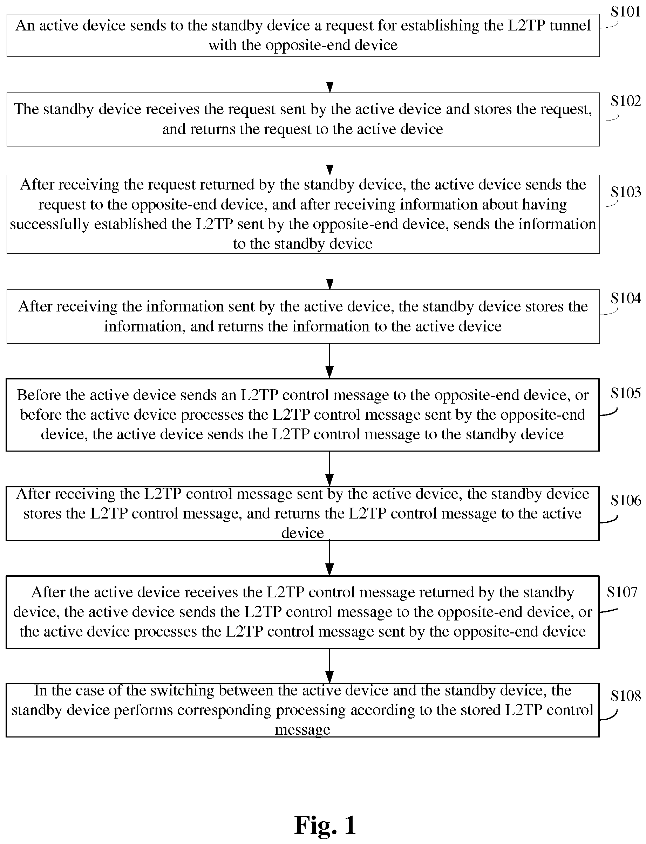

The embodiment of the present invention provides a method for keeping alive an L2TP tunnel state, as shown in figure 1, the method includes:
S101. An active device sends to the standby device a request for establishing the L2TP tunnel with the opposite-end device,
   wherein the active device and the standby device respectively are an L2TP access concentrator (LAC for short) and an L2TP network server (LNS for short).
S102. The standby device receives the request sent by the active device and stores the request, and returns the request to the active device;
S103. After receiving the request returned by the standby device, the active device sends the request to the opposite-end device, and after receiving information about having successfully established the L2TP sent by the opposite-end device, sends the information to the standby device;
S104. After receiving the information sent by the active device, the standby device stores the information, and returns the information to the active device;

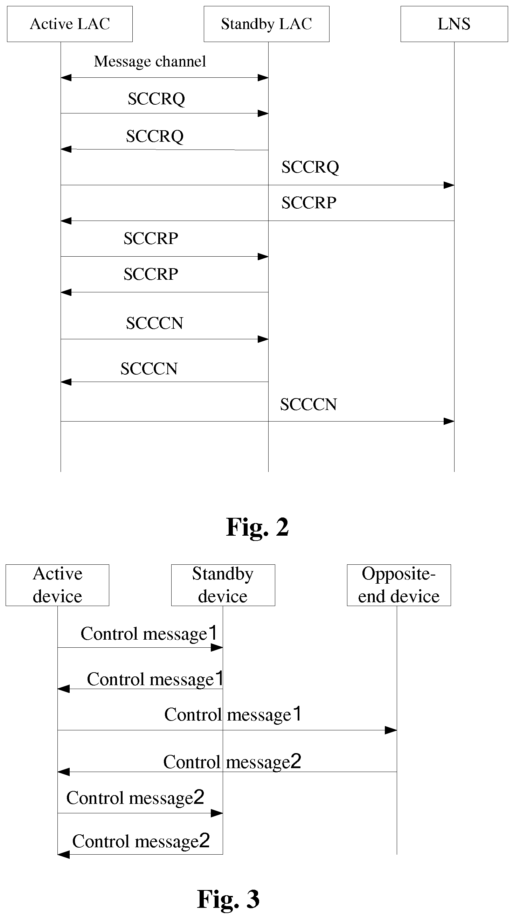

The embodiment of the present invention provides a method for establishing an L2TP tunnel between active and standby LACs and LNSs, as shown in figure 2, and the method includes:
step A1, a TCP connection is established between an active LAC and a standby LAC for transmitting an L2TP control message;
step A2, the active LAC encapsulates an SCCRQ (Start-Control-Connection-Request, a tunnel establishment request) message (being used for sending to the LNS an L2TP tunnel establishment request);
step A3, the active LAC sends an encapsulated SCCRQ message to the standby LAC via a message channel between active and standby LACs;
step A4, after receiving the SCCRQ message, the standby LAC stores same and updates a locally standby tunnel state, and sends the SCCRQ message back to the active LAC;
step A5, the active LAC sends to an LNS the SCCRQ message which is sent back by the standby LAC;
step A6, the LNS sends an SCCRP (Start-Control-Connection-Reply, an L2TP tunnel establishment response) message to the active LAC;
step A7, the active LAC sends the received SCCRP message to the standby LAC via a message channel between active and standby LACs;
step A8, after receiving the SCCRP message, the standby LAC stores same and updates a locally standby tunnel state, and sends the SCCRP message back to the active LAC;
step A9, the active LAC processes the SCCRP message which is sent back by the standby LAC;
step A10, the active LAC encapsulates an SCCCN (Start-Control-Connection-Connected, tunnel establishment success) message (being used for sending to the LNS a response of tunnel establishment success);
step A11, the active LAC sends an encapsulated SCCCN message to the standby LAC via a message channel between active and standby LACs;
step A12, after receiving the SCCCN message, the standby LAC stores same and updates a locally standby tunnel state, and sends the SCCCN message back to the active LAC;
step A13, the active LAC sends to an LNS the SCCCN message which is sent back by the standby LAC.

The embodiment of the present invention synchronizes the situation of establishing an L2TP tunnel between an active and standby device pair and an opposite-end device, ensuring that after switching between the active device and the standby device, the standby device and the opposite-end device can work normally, which will not cause discarding of the message, and ensuring the normal working state.

S105. Before the active device sends an L2TP control message to the opposite-end device, or before the active device processes the L2TP control message sent by the opposite-end device, the active device sends the L2TP control message to the standby device;

Each control message between the opposite-end device and the active and standby device of the embodiment of the present invention is provided with a serial number, and the serial number includes Ns (Number Send, a serial number of sending a message this time) and Nr (Next Receive, a serial number of a message expected to be received next time). In this way, before the active device sends to the opposite-end device an L2TP control message, or before the active device processing the L2TP control message sent by the opposite-end device, the active device will always send to the standby device an L2TP control message with a serial number, and after storing the L2TP control message, the standby device then returns the L2TP control message to an active device, and after receiving the L2TP control message, the active device then performs other processing, that is, control messages of an active and standby device and an opposite-end device in the embodiments of the present invention always keep synchronous, this ensuring that when the malfunction of the active device accrues, after switching between the active device and the standby device, the standby device and the opposite-end device can work normally, which will not cause discarding of the message, and ensuring the normal working state.

S106. after receiving the L2TP control message sent by the active device, the standby device stores the L2TP control message, and returns the L2TP control message to the active device;

In the embodiment of the present invention, the standby device updates states of the L2TP tunnel and a session on the standby device, when the standby device stores and returns the L2TP control message of the active device.

S107. After the active device receives the L2TP control message returned by the standby device, the active device sends the L2TP control message to the opposite-end device, or the active device processes the L2TP control message sent by the opposite-end device;

S108. in the case of the switching between the active device and the standby device, the standby device performs corresponding processing according to the stored L2TP control message.

In the embodiment of the present invention, the active device, the standby device and the opposite-end device real-time monitor network connectivity of an L2TP tunnel established between the active device and the opposite-end device. When the L2TP tunnel is monitored to have failed, the standby device switches with the active device, and certainly the person skilled in the art also may use another manner to monitor the L2TP tunnel.

Monitoring the network connectivity of the L2TP tunnel used in the embodiment of the present invention specifically is:
when the active device monitors that a failure occurs in the L2TP tunnel between itself and the opposite-end device (for example, two end devices of an L2TP tunnel, i.e. an active device and an opposite-end device, starting BFD detection (bidirectional forwarding detection), accelerating a failure sensing speed), the standby device is triggered to switch with itself;
   or,
when the standby device detects that the active device is invalid (for example, starting the BFD detection between the active device and the standby device, the standby device detecting that the active device has a failure through the BFD detection), then it may be determined that a failure occurs in the L2TP tunnel between the active device and the opposite-end device, triggering the standby device and the active device to switch.

The embodiment of the present invention further provides a method for keeping alive the state of the L2TP tunnel established by the active and standby device and the opposite-end device. it can be seen from figure 3 that before sending the L2TP control message to the opposite-end device, the active device firstly sends to the standby device the L2TP control message with a serial number, and a standby device stores the L2TP control message after receiving the L2TP control message, and then returns the L2TP control message to the active device. The active device sends the L2TP control message to the opposite-end device after receiving the L2TP control message returned by the standby device, and the opposite-end device then sends another L2TP control message to the active device after receiving the L2TP control message. The method ensures that L2TP control messages of the active and standby device and the opposite-end device always keep synchronous.

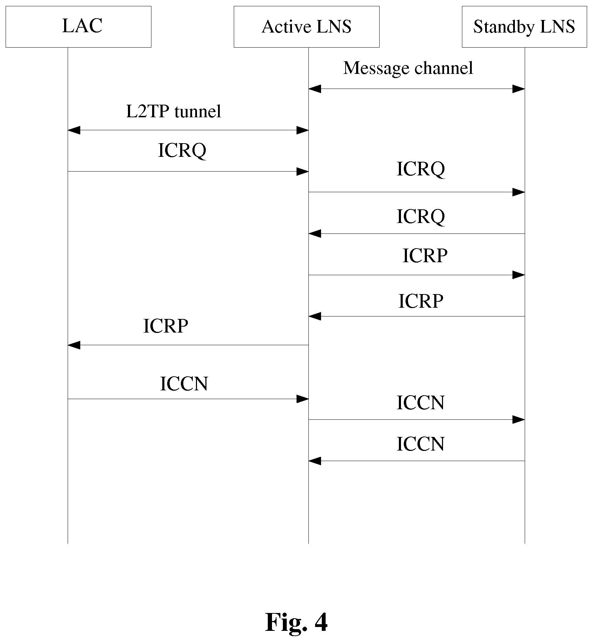

The embodiment of the present invention further provides a method for keeping alive the state of an L2TP tunnel established between an LAC and active and standby LNSs, as shown in figure 4, the method includes:
step B1, a TCP connection is established between an active LNS and a standby LNS for transmitting an L2TP control message;
step B2, an L2TP tunnel is established between the active LNS and the LAC device, and see step A1 to step A13 for details about the process for establishing the L2TP tunnel;
step B3, the LAC sends an ICRQ (Incoming-Call-Request, a session establishment request) message to the active LNS;
step B4, the active LNS sends the received ICRQ message to the standby LNS via a message channel between active and standby LNSs;
step B5, after receiving the ICRQ message, the standby LNS stores the message and updates a locally standby session state, and sends the ICRQ message to the active LNS;
step B6, the active LNS processes the ICRQ message sent back by the standby LNS;
step B7, the active LNS encapsulates an ICRP (Incoming-Call-Replay, a session establishment response) message (being used for sending a tunnel establishment response to the LAC);
step B8, the active LNS sends the encapsulated ICRP message to the standby LNS via a message channel between active and standby LNSs;
step B9, after receiving the ICRP message, the standby LNS stores information about Ns, Nr and so on and updates a locally standby session state, and sends the ICRP message back to the active LNS;
step B10, the active LNS sends to the LAC the ICRP message sent back by the standby LNS;
step B11, the LAC sends an ICCN (Incoming-Call-Connected, session establishment success) message to the active LNS (being used for sending a session establishment success acknowledgement to an LNS);
step B12, the active LNS sends the received ICCN message to the standby LNS via a message channel between active and standby LNSs;
step B13, after receiving the ICCN message, the standby LNS stores information about Ns, Nr and so on and updates a locally standby session state, and sends the ICRQ message back to the active LNS;
step B14, the active LNS processes the ICCN message sent back by the standby LNS.

The SCCRQ message, SCCRP message, SCCCN message, ICRQ message, ICRP message, ICCN message, a request for establishing an L2TP tunnel by the opposite-end device and a response of L2TP establishment success, etc. in the embodiment of the present invention are all L2TP control messages, and the L2TP control messages in the embodiment of the present invention further include messages of the active and standby device performing a session and other communication with the opposite-end device.

The embodiments of the present invention disclose a method for keeping alive an L2TP tunnel state, and through the process of an active device establishing an L2TP tunnel with an opposite-end device, and before the active device sends to the opposite-end device an L2TP control message, or before the active device processing the L2TP control message sent by the opposite-end device, the active device will always send to the standby device an L2TP control message with a serial number, and after storing the L2TP control message, the standby device then returns the L2TP control message to an active and standby device, and after receiving the L2TP control message, the active and standby device then performs other processing. L2TP control messages of an active device, a standby device and an opposite-end device in the embodiments of the present invention always keep synchronous, ensuring that after switching between the active and standby device, the standby device and the opposite-end device may work normally, which will not cause discarding of the message, and ensuring the normal working state.

### Embodiment 2

The embodiments of the present invention provide an apparatus for keeping alive an L2TP tunnel state, and the apparatus includes:
an active device, configured to establish an L2TP tunnel with an opposite-end device, transmit to a standby device an interactive L2TP control message between the active device and the opposite-end device, and perform corresponding processing on the L2TP control message only after having received a response about having already stored the L2TP control message sent by the standby device, and monitor network connectivity of the L2TP tunnel established between the active device and the opposite-end device, and when the L2TP tunnel is monitored to have a failure, trigger the standby device to switch with itself; and further configured to send to the standby device a request for establishing the L2TP tunnel with the opposite-end device, and after receiving a response about having stored the request sent by the standby device, send the request to the opposite-end device, and after receiving information about having successfully established the L2TP tunnel sent by the opposite-end device, send the information to the standby device, and receive a response of the standby device having stored the information;
the standby device, configured to the active device a response about having stored the L2TP control message after receiving and storing the L2TP control message sent by the active device, and when active-standby switching occurs between the standby device and the active device, connect to the opposite-end device via the L2TP tunnel, and performing corresponding processing according to the L2TP control message which has already been stored; and further configured to the active device a response about having stored the request after receiving and storing the request sent by the active device, and send to the active device a response about having stored the information after receiving and store information about having successfully established the L2TP tunnel sent by the active device.

In the embodiment of the information, the active device is an L2TP access concentrator or an L2TP network server; and the standby device is an L2TP access concentrator or an L2TP network server.

Each of the L2TP control messages in the embodiment of the present invention carries a corresponding serial number.

The standby device, further configured to update states of the L2TP tunnel and a session on the standby device, when the standby device stores the L2TP control message sent by the active device.

In conclusion, the embodiments of the present invention disclose a method and apparatus for keeping alive an L2TP tunnel state, and through the process of an active device establishing an L2TP tunnel with an opposite-end device, and before the active device sends to the opposite-end device an L2TP control message, or before the active device processing the L2TP control message sent by the opposite-end device, the active device will always send to the standby device an L2TP control message with a serial number, and after storing the L2TP control message, the standby device then returns the L2TP control message to an active and standby device, and after receiving the L2TP control message, the active device and the standby device then perform other processing, that is, L2TP control messages of an active and standby device and an opposite-end device in the embodiments of the present invention always keep synchronous, ensuring that after switching between the active and standby device, the standby device and the opposite-end device can work normally, which will not cause discarding of the message, and ensuring the normal working state.

The foregoing descriptions are merely exemplary implementation manners of the present invention, but the protection scope of the present invention is not limited here. Any variation or replacement that may be easily thought of by persons skilled in the art without departing from the technical scope disclosed in the present invention shall fall within the protection scope of the present invention. Therefore, the protection scope of the present invention shall be subject to the protection scope of the claims.

### Industrial Applicability

The technical solutions provided in the embodiments of the present invention may be applied in the field of switching an active and standby device, and they solve the problem of working state being chaotic caused by switching of an active and standby device.

## Claims

1. A method for keeping alive an L2TP tunnel state, **characterized by** comprising:
an active device establishing an L2TP tunnel with an opposite-end device, the active device transmitting (S105) to a standby device an interactive L2TP control message, said interactive L2TP control message comprising an L2TP control message to be sent from the active device to the opposite-end device, or an L2TP control message sent from the opposite-end device to the active device; and the active device performing (S107) corresponding processing on the L2TP control message only after having received a response sent (S106) by the standby device about having stored the L2TP control message;
and when active-standby switching occurs between the active device and the standby device, the standby device connecting to the opposite-end device via the L2TP tunnel, and performing (S108) corresponding processing according to the L2TP control message which has already been stored.

2. The method according to claim 1, **characterized in that** the active device establishing the L2TP tunnel with the opposite-end device comprises:
the active device sending (S101) to the standby device a request for establishing the L2TP tunnel with the opposite-end device;
the standby device receiving (S102) and storing (S102) the request sent by the active device, and sending to the active device a response about having stored the request;
and after receiving the response about having stored the request sent by the standby device, the active device sending (S103) the request to the opposite-end device, and after receiving information about having successfully established the L2TP tunnel sent by the opposite-end device, sending (S103) the information to the standby device for storing.

3. The method according to claim 1 or 2, **characterized in that** the active device is an L2TP access concentrator or an L2TP network server; and the standby device is an L2TP access concentrator or an L2TP network server.

4. The method according to claim 1 or 2, **characterized in that** each of the L2TP control messages carries a corresponding serial number.

5. The method according to claim 1 or 2, **characterized in that** the standby device updates states of the L2TP tunnel and a session on the standby device, when the standby device stores the L2TP control message sent by the active device.

6. An apparatus for keeping alive an L2TP tunnel state, **characterized by** comprising:
an active device, configured to establish an L2TP tunnel with an opposite-end device, and transmit to a standby device an interactive L2TP control message, said interactive L2TP control message comprising an L2TP control message to be sent from the active device to the opposite-end device, or an L2TP control message sent from the opposite-end device to the active device; and perform corresponding processing on the L2TP control message only after having received a response sent by the standby device about having already stored the L2TP control message;
the standby device, configured to send to the active device a response about having stored the L2TP control message after receiving and storing the L2TP control message sent by the active device, and when active-standby switching occurs between the standby device and the active device, connecting to the opposite-end device via the L2TP tunnel, and performing corresponding processing according to the L2TP control message which has already been stored.

7. The apparatus according to claim 6, **characterized in that**
the active device, further configured to send to the standby device a request for establishing the L2TP tunnel with the opposite-end device, and after receiving a response about having stored the request sent by the standby device, send the request to the opposite-end device, and after receiving information about having successfully established the L2TP tunnel sent by the opposite-end device, send the information to the standby device, and receive a response about the standby device having stored the information;
and the standby device, further configured to send to the active device a response about having stored the request after receiving and storing the request sent by the active device, and sending to the active device a response about having stored the information after receiving and storing information about having successfully established the L2TP tunnel sent by the active device.

8. The apparatus according to claim 6 or 7, **characterized in that** the active device is an L2TP access concentrator or an L2TP network servers ; and the standby device is an L2TP access concentrator or an L2TP network server.

9. The apparatus according to claim 6 or 7, **characterized in that** each of the L2TP control messages carries a corresponding serial number.

10. The apparatus according to claim 6 or 7, **characterized in that**
the standby device, further configured to update states of the L2TP tunnel and a session on the standby device, when the standby device stores the L2TP control message sent by the active device.

## Patentansprüche

1. Verfahren zur Aufrechterhaltung eines L2TP-Tunnelzustands, **dadurch gekennzeichnet, dass** es umfasst:
ein aktives Gerät, das einen L2TP-Tunnel mit einem gegenüberliegenden Gerät ausbildet, wobei das aktive Gerät eine interaktive L2TP-Steuernachricht an ein Standby-Gerät überträgt (S105), wobei die interaktive L2TP-Steuernachricht eine von dem aktiven Gerät an das gegenüberliegende Gerät zu sendende L2TP-Steuernachricht umfasst, oder
eine L2TP-Steuernachricht, die von dem gegenüberliegenden Gerät an das aktive Gerät gesendet wird; und wobei das aktive Gerät eine entsprechende Verarbeitung der L2TP-Steuernachricht erst dann durchführt (S107), nachdem es eine von dem Standby-Gerät gesendete (S106) Antwort empfangen hat, dass die L2TP-Steuernachricht gespeichert wurde;
und wobei, wenn ein Umschalten von dem aktiven in den Standby-Zustand zwischen dem aktiven Gerät und dem Standby-Gerät erfolgt, das Standby-Gerät sich mit dem gegenüberliegenden Gerät über den L2TP-Tunnel verbindet und eine entsprechende Verarbeitung gemäß der bereits gespeicherten L2TP-Steuernachricht durchführt (S108).

2. Verfahren nach Anspruch 1, **dadurch gekennzeichnet, dass** das Ausbilden des L2TP-Tunnels mit dem gegenüberliegenden Gerät durch das aktive Gerät umfasst:
das Senden (S101) durch das aktive Gerät an das Standby-Gerät einer Anforderung zum Ausbilden des L2TP-Tunnels mit dem gegenüberliegenden Gerät;
das Empfangen (S102) und Speichern (S102) der von dem aktiven Gerät gesendeten Anforderung und das Senden einer Antwort an das aktive Gerät, dass die Anforderung gespeichert wurde;
und nach dem Empfangen der Antwort, dass die von dem Standby-Gerät gesendete Anforderung gespeichert wurde, das Senden (S103) durch das aktive Gerät der Anforderung an das gegenüberliegende Gerät, und nach dem Empfangen der Information über das erfolgreiche Ausbilden des L2TP-Tunnels, die von dem gegenüberliegenden Gerät gesendet wird, das Senden (S103) der Information an das Standby-Gerät zum Speichern.

3. Verfahren nach Anspruch 1 oder 2, **dadurch gekennzeichnet, dass** das aktive Gerät ein L2TP-Zugriffskonzentrator oder ein L2TP-Netzwerkserver ist; und das Standby-Gerät ein L2TP-Zugriffskonzentrator oder ein L2TP-Netzwerkserver ist.

4. Verfahren nach Anspruch 1 oder 2, **dadurch gekennzeichnet, dass** jede der L2TP-Steuernachrichten eine entsprechende Seriennummer trägt.

5. Verfahren nach Anspruch 1 oder 2, **dadurch gekennzeichnet, dass** das Standby-Gerät Zustände des L2TP-Tunnels und eine Sitzung auf dem Standby-Gerät aktualisiert, wenn das Standby-Gerät die von dem aktiven Gerät gesendete L2TP-Steuernachricht speichert.

6. Vorrichtung zur Aufrechterhaltung eines L2TP-Tunnelzustands, **dadurch gekennzeichnet, dass** sie umfasst:
ein aktives Gerät, das konfiguriert ist, um einen L2TP-Tunnel mit einem gegenüberliegenden Gerät auszubilden und eine interaktive L2TP-Steuernachricht an ein Standby-Gerät zu übertragen, wobei die interaktive L2TP-Steuernachricht eine von dem aktiven Gerät an das gegenüberliegende Gerät zu sendende L2TP-Steuernachricht oder
eine von dem gegenüberliegenden Gerät an das aktive Gerät gesendete L2TP-Steuernachricht umfasst; und eine entsprechende Verarbeitung der L2TP-Steuernachricht erst dann durchzuführen, nachdem es eine von dem Standby-Gerät gesendete Antwort empfangen hat, dass die L2TP-Steuernachricht bereits gespeichert wurde;
das Standby-Gerät, das konfiguriert ist, um an das aktive Gerät eine Antwort zu senden, dass die L2TP-Steuernachricht nach dem Empfangen und Speichern der von dem aktiven Gerät gesendeten L2TP-Steuernachricht gespeichert wurde, und wenn ein Umschalten von dem aktiven in den Standby-Zustand zwischen dem Standby-Gerät und dem aktiven Gerät stattfindet, mit dem gegenüberliegenden Gerät über den L2TP-Tunnel zu verbinden und eine entsprechende Verarbeitung gemäß der bereits gespeicherten L2TP-Steuernachricht durchzuführen.

7. Vorrichtung nach Anspruch 6, **dadurch gekennzeichnet, dass**
das aktive Gerät ferner konfiguriert ist, um an das Standby-Gerät eine Anforderung zum Ausbilden des L2TP-Tunnels mit dem gegenüberliegenden Gerät zu senden, und nach dem Empfangen einer Antwort, dass die von dem Standby-Gerät gesendete Anforderung gespeichert wurde, die Anforderung an das gegenüberliegende Gerät zu senden, und nach dem Empfangen der von dem gegenüberliegenden Gerät gesendeten Information über das erfolgreiche Ausbilden des L2TP-Tunnels, die Information an das Standby-Gerät zu senden und eine Antwort, dass das Standby-Gerät die Information gespeichert hat, zu empfangen;
und das Standby-Gerät, das ferner konfiguriert ist, um an das aktive Gerät eine Antwort zu senden, dass die Anforderung nach dem Empfangen und Speichern der von dem aktiven Gerät gesendeten Anforderung gespeichert wurde, und dem aktiven Gerät eine Antwort zu senden, dass die Information nach dem Empfangen und Speichern der von dem aktiven Gerät gesendeten Information über das erfolgreiche Ausbilden des L2TP-Tunnels gespeichert wurde.

8. Vorrichtung nach Anspruch 6 oder 7, **dadurch gekennzeichnet, dass** das aktive Gerät ein L2TP-Zugriffskonzentrator oder ein L2TP-Netzwerkserver ist; und das Standby-Gerät ein L2TP-Zugriffskonzentrator oder ein L2TP-Netzwerkserver ist.

9. Vorrichtung nach Anspruch 6 oder 7, **dadurch gekennzeichnet, dass** jede der L2TP-Steuernachrichten eine entsprechende Seriennummer trägt.

10. Vorrichtung nach Anspruch 6 oder 7, **dadurch gekennzeichnet, dass** das Standby-Gerät ferner konfiguriert ist, um Zustände des L2TP-Tunnels und eine Sitzung auf dem Standby-Gerät zu aktualisieren, wenn das Standby-Gerät die von dem aktiven Gerät gesendete L2TP-Steuernachricht speichert.

## Revendications

1. Procédé pour maintenir en vie un état de tunnel L2TP, **caractérisé en ce qu'**il comprend les étapes suivantes :
- un dispositif actif établit un tunnel L2TP avec un dispositif d'extrémité opposée, le dispositif actif transmettant (S105) à un dispositif de veille un message de commande L2TP interactif, ledit message de commande L2TP interactif comprenant un message de commande L2TP devant être envoyé depuis le dispositif actif vers le dispositif d'extrémité opposée, ou un message de commande L2TP envoyé depuis le dispositif d'extrémité opposée vers le dispositif actif ; et
- le dispositif actif effectue (S107) un traitement correspondant sur le message de commande L2TP uniquement après avoir reçu une réponse envoyée (S106) par le dispositif de veille concernant le stockage du message de commande L2TP ;
- et lorsqu'une commutation actif-veille se produit entre le dispositif actif et le dispositif de veille, le dispositif de veille se connecte au dispositif d'extrémité opposée via le tunnel L2TP et effectue (S108) un traitement correspondant en fonction du message de commande L2TP qui a déjà été stocké.

2. Procédé selon la revendication 1, **caractérisé en ce que** l'établissement, par le dispositif actif, du tunnel L2TP avec le dispositif d'extrémité opposée comprend les étapes suivantes :
- le dispositif actif envoie (S101) au dispositif de veille une requête d'établissement du tunnel L2TP avec le dispositif d'extrémité opposée ;
- le dispositif de veille reçoit (S102) et stocke (S102) la requête envoyée par le dispositif actif et envoie au dispositif actif une réponse concernant le stockage de la requête ;
- et après avoir reçu la réponse concernant le stockage de la requête envoyée par le dispositif de veille, le dispositif actif envoie (S103) la requête au dispositif d'extrémité opposée, et après avoir reçu des informations concernant l'établissement réussi du tunnel L2TP envoyées par le dispositif d'extrémité opposée, envoie (S103) les informations au dispositif de veille pour stockage.

3. Procédé selon la revendication 1 ou 2, **caractérisé en ce que** le dispositif actif est un concentrateur d'accès L2TP ou un serveur réseau L2TP, et **en ce que** le dispositif de veille est un concentrateur d'accès L2TP ou un serveur réseau L2TP.

4. Procédé selon la revendication 1 ou 2, **caractérisé en ce que** chacun des messages de commande L2TP transporte un numéro de série correspondant.

5. Procédé selon la revendication 1 ou 2, **caractérisé en ce que** le dispositif de veille met à jour des états du tunnel L2TP et une session sur le dispositif de veille, lorsque le dispositif de veille stocke le message de commande L2TP envoyé par le dispositif actif.

6. Appareil pour maintenir en vie un état de tunnel L2TP, **caractérisé en ce qu'**il comprend :
- un dispositif actif configuré pour établir un tunnel L2TP avec un dispositif d'extrémité opposée, et transmettre à un dispositif de veille un message de commande L2TP interactif, ledit message de commande L2TP interactif comprenant un message de commande L2TP devant être envoyé depuis le dispositif actif vers le dispositif d'extrémité opposée, ou un message de commande L2TP envoyé depuis le dispositif d'extrémité opposée vers le dispositif actif ; et effectuer un traitement correspondant sur le message de commande L2TP uniquement après avoir reçu une réponse envoyée par le dispositif de veille concernant le stockage du message de commande L2TP ;
- le dispositif de veille, configuré pour envoyer au dispositif actif une réponse concernant le stockage du message de commande L2TP après avoir reçu et stocké le message de commande L2TP envoyé par le dispositif actif et, lorsqu'une commutation actif-veille se produit entre le dispositif de veille et le dispositif actif, se connecter au dispositif d'extrémité opposée via le tunnel L2TP, et effectuer un traitement correspondant en fonction du message de commande L2TP qui a déjà été stocké.

7. Appareil selon la revendication 6, **caractérisé en ce que** :
- le dispositif actif est en outre configuré pour envoyer au dispositif de veille une requête d'établissement du tunnel L2TP avec le dispositif d'extrémité opposée et, après avoir reçu une réponse concernant le stockage de la requête envoyée par le dispositif de veille, envoyer la requête au dispositif d'extrémité opposée et, après avoir reçu des informations concernant l'établissement réussi du tunnel L2TP envoyées par le dispositif d'extrémité opposée, envoyer les informations au dispositif de veille, et recevoir une réponse concernant le stockage des informations par le dispositif de veille ;
- le dispositif de veille est en outre configuré pour envoyer au dispositif actif une réponse concernant le stockage de la requête après réception et stockage de la requête envoyée par le dispositif actif, et envoyer au dispositif actif une réponse concernant le stockage des informations après réception et stockage des informations concernant l'établissement réussi du tunnel L2TP envoyées par le dispositif actif.

8. Appareil selon la revendication 6 ou 7, **caractérisé en ce que** le dispositif actif est un concentrateur d'accès L2TP ou un serveur réseau L2TP, et **en ce que** le dispositif de veille est un concentrateur d'accès L2TP ou un serveur réseau L2TP.

9. Appareil selon la revendication 6 ou 7, **caractérisé en ce que** chacun des messages de commande L2TP transporte un numéro de série correspondant.

10. Appareil selon la revendication 6 ou 7, **caractérisé en ce que** le dispositif de veille est en outre configuré pour mettre à jour des états du tunnel L2TP et une session sur le dispositif de veille, lorsque le dispositif de veille stocke le message de commande L2TP envoyé par le dispositif actif.
